# EUROPÄISCHE PATENTSCHRIFT

(11) **EP 3 863 789 B1**
(45) Veröffentlichungstag und Bekanntmachung des Hinweises auf die Patenterteilung: **02.12.2026**
(21) Anmeldenummer: 19786315.2
(22) Anmeldetag: 08.10.2019
(51) Int. Cl.: B23D 21/06, B23D 21/08, B26D 3/16

(54) **ROHRSCHNEIDEGERÄT**
APPARATUS FOR CUTTING TUBES
DISPOSITIF POUR LA COUPE DE TUBES

(30) Priorität: 09.10.2018 DE 102018124817
(43) Veröffentlichungstag der Anmeldung: 18.08.2021
(73) Patentinhaber: Knipex-Werk C. Gustav Putsch KG, 42349 Wuppertal (DE)
(72) Erfinder: HEINSOHN, Andreas, 42369 Wuppertal (DE)
(74) Vertreter: Müller, Enno
(86) Internationale Anmeldenummer: PCT/EP2019/077181
(87) Internationale Veröffentlichungsnummer: WO 2020/074487

(56) Entgegenhaltungen:
- EP-A1- 1 166 927
- GB-A- 2 333 732
- JP-A- 2016 034 695
- KR-B1- 101 474 885

## Beschreibung

### Gebiet der Technik

Die Erfindung betrifft ein Rohrschneidegerät nach den Merkmalen des Oberbegriffs des Anspruches 1.

### Stand der Technik

Rohrschneidegeräte sind insbesondere aus der Sanitär-Installationstechnik und aus dem Rohrleitungsbau bekannt. Mit einem solchen Rohrschneidegerät kann in vorteilhafter Weise in kreisförmigem Schnitt mit mindestens einem umlaufenden Schneidmesser ein Rohrstück aus beispielsweise Flussstahl, V2A, Gusseisen, Messing oder auch aus einem thermoplastischen Kunststoff bevorzugt spanlos durchtrennt werden. Hierbei kann das aktive Element ein profilkeilförmiges, gehärtetes Schneidrad sein, beispielsweise bestehend aus einem Schnellarbeitsstahl, gegebenenfalls aus einem Hartmetall.

Weiter ist bekannt, das Anstellelement zur Schnell- bzw. Grobverstellung der Öffnungsweite willensbetont aus einer ansonsten üblichen Rastfestsetzung zu lösen, wozu das der Rastfestsetzung dienende Eingriffselement zur Handbetätigung frei liegt.

Ein solcher Rohrschneider ist beispielsweise aus der US 3,100,934 A bekannt. Der dort gezeigte und beschriebene Rohrschneider weist die Möglichkeit einer Grobeinstellung auf, zur Grobverstellung der Öffnungsweite zwischen Anstellelement und Gegenhalter.

Aus der EP 1 166 927 A1 ist ein Schälgerät für zylinderförmige Gegenstände bekannt. Ein Schälkopf ist hierzu umfassend zu dem Spindeltrieb ausgebildet. Zur Grobverstellung muss ein Schnappverschluss außer Eingriff mit der Spindel gebracht werden. Aus der JP 2015-016544 A ist ein Rohrschneidegerät bekannt, das allerdings an dem Anstellelement anzufassen ist. Das Einstellelement umfasst den Spindelbetrieb. Aus der GB 2333732 A ist ein Gerät bekannt, das sowohl zum Rohrschneiden als auch zum Rohrschälen ausgebildet sein kann. Es weist ein insgesamt nur C-förmiges Gestell auf. Das Schneidegerät selbst ist nur verstellbar.

Ausgehend von dem dargelegten Stand der Technik beschäftigt sich die Erfindung mit der Aufgabenstellung, ein Rohrschneidegerät der genannten Art insbesondere handhabungstechnisch vorteilhaft auszugestalten.

Diese Aufgabe ist beim Gegenstand des Anspruches 1 gelöst, wobei darauf ist, dass das Eingriffselement an dem Anstellelement ausgebildet ist sowie mit dem Anstellelement relativ zu dem Aufnahmeteil verfahrbar ist, dass das Anstellelement in dem Fußteil in einer Nutführung formschlüssig jedoch verfahrbahr gehaltert ist und dass das Rohrschneidegerät unabhängig von einer Verfahrstellung des Anstellelementes seine äußere Kontur hinsichtlich seiner Länge in Längserstreckung und seiner hierzu betrachteten Breitenerstreckung beibehält.

Zufolge der vorgeschlagenen Ausgestaltung ist eine günstige Handhabung des Rohrschneidegerätes gegeben. Die Anordnung des Eingriffselementes an dem Anstellelement ermöglicht eine Einhandbedienung des Rohrschneidegerätes auch im Zuge einer Verstellung, insbesondere Grobverstellung unter Aufhebung der Rastfestsetzung. Das Eingriffselement kann so griffgünstig, beispielsweise daumenbetätigbar, angeordnet sein, wobei weiter gegebenenfalls, wie auch bevorzugt, mit dem betätigten Eingriffselement auf das Anstellelement zur bevorzugten Verlagerung desselben eingewirkt werden kann.

Die Verlagerung des Anstellelementes kann, wie weiter auch bevorzugt, eine lineare Schiebeverlagerung sein.

Mit Aufhebung der Rastfestsetzung zufolge Betätigung des Eingriffselementes ist das Eingriffselement zusammen mit dem Anstellelement relativ zu dem bevorzugt feststehenden Aufnahmeteil verfahrbar.

Das Eingriffselement kann an dem Anstellelement ausgebildet sein sowie mit dem Anstellelement relativ zu dem Aufnahmeteil verfahrbar sein, wobei eine trapezförmige Querschnittsgestaltung der Verzahnung sowohl des Eingriffselementes als auch des Aufnahmeteils bzw. des Außengewindes gegeben ist, wodurch eine sich in Richtung einer Verkleinerung der Öffnungsweite überlaufbare Rastfestsetzung gegeben ist während in die entgegengesetzte Richtung zur Verfahrrichtung ein Überlaufen zufolge der Hebelanordnung des Eingriffselementes nicht möglich ist.

### Zusammenfassung der Erfindung

Unabhängig von einer Verfahrstellung des Anstellelementes relativ zu dem Arbeitskopf sind die äußeren Begrenzungen des Rohrschneidegerätes - beispielsweise mit Bezug auf eine Projektion des Rohrschneidegerätes in eine Ebene senkrecht zur Verfahrrichtung des Anstellelementes - im Wesentlichen nicht verändert. Es ergibt sich so eine günstige Handhabbarkeit des Rohrschneidegerätes insgesamt, unabhängig von der Verfahrstellung des Anstellelementes. Bevorzugt ist hierbei in jeder Verfahrstellung des Anstellelementes das Eingriffselement greifgünstig erreichbar. So kann mit einem üblichen Umfassen des als Griffbereich nutzbaren Fußteils des Rohrschneidegerätes gemäß einer bevorzugten Ausgestaltung das Anstellelement bei entsprechender bevorzugter Daumenbetätigung des Eingriffsteils über den gesamtmöglichen Verfahrweg verlagerbar sein, ohne dass ein Umgreifen notwendig ist.

Gemäß einer bevorzugten Ausgestaltung kann das Aufnahmeteil an einem hinsichtlich einer Bewegung in Richtung einer Längsachse des Aufnahmeteils in dem Fußteil feststehenden Spindelteil ausgebildet sein. Ein solches Spindelteil kann hierzu beispielsweise wandungsaußenseitig eine Profilierung aufweisen, beispielsweise in Form eines Außengewindes, zur Zusammenwirkung mit einer entsprechenden Gegenprofilierung des Eingriffselementes.

Hierbei kann weiter das Spindelteil um dessen Längsachse, die gleichgerichtet sein kann zur Längsachse des Aufnahmeteils, drehbar sein, zur Feineinstellung der Öffnungsweite. Insbesondere kann in diesem Zusammenhang das mit dem Eingriffselement zusammenwirkende Aufnahmeteil durch ein mantelseitig des Spindelteils ausgebildetes Außengewinde gegeben sein. Entsprechend kann in der Rastfestsetzungsstellung zufolge einer Drehverlagerung des Spindelteils um die Längsachse des Spindelteils eine Feineinstellung der Öffnungsweite vorgenommen werden, indem das Anstellelement über das in Eingriff mit dem Außengewinde des Spindelteils stehende Eingriffselement schiebeverlagert wird.

Zur Drehung des Spindelteils kann an dem Fußteil, beispielsweise endseitig, abgewandt dem Gegenhalter, eine Handhabe vorgesehen sein. Dadurch bedingt, dass das Spindelteil in Richtung der Längsachse des Aufnahmeteils und in Richtung der Längsachse des Spindelteils in dem Fußteil feststehend ausgebildet ist, kann sich gemäß einer bevorzugten Ausgestaltung auch eine entsprechend in dieser Richtung feststehende Anordnung des auf das Spindelteil einwirkenden Handhabungsteils ergeben.

Das Anstellelement ist kein in dem Fußteil formschlüssig, jedoch verfahrbar gehaltert. Es wird diesbezüglich eine Schlitten- oder auch Nutführung für das Anstellelement vorgesehen. Hierüber ist insbesondere eine lineare Verlagerung des Anstellelementes ermöglicht.

Auch kann das Anstellelement zwischen einem Anschlag an dem Arbeitskopf und einem Anschlag an dem Fußteil verfahrbar sein. Der Anschlag an dem Fußteil kann hierbei, wie auch bevorzugt, die größtmögliche Öffnungsweite des Arbeitskopfes definieren. Der Anschlag an dem Arbeitskopf kann die geringste Öffnungsweite definieren, wobei der diesen Anschlag formgebende, bevorzugt mit dem Anstellelement zusammenwirkende Abschnitt des Arbeitskopfes abgewandt dem Gegenhalter zugeordnet einem in den Fußteil übergehenden Bereich des Arbeitskopfes ausgebildet sein kann.

Eine weitere günstige Handhabung kann dadurch gegeben sein, dass das Anstellelement mittels einer Feder in eine Anschlagstellung an dem Fußteil vorgespannt ist. So kann entsprechend hierdurch eine Federvorspannung des Anstellelementes in Richtung auf eine größte Öffnungsweite des Arbeitskopfes gegeben sein. Die Verstellung des Anstellelementes, insbesondere Schiebeverstellung desselben zur Verringerung der Öffnungsweite, geschieht entsprechend entgegen der Rückstellkraft der Feder.

Hieraus ergibt sich der vorteilhafte Effekt, dass ein verlagertes Anstellelement nach Aufhebung der Rastfestsetzung zufolge Betätigung des Eingriffselementes selbsttätig sich zurückverlagert in Richtung auf die Anschlagstellung am Fußteil oder dass diese Rückverlagerungsbewegung, die durch den Benutzer zufolge Einwirkung auf das Anstellelement eingeleitet wird, durch die Federkraft unterstützt wird.

Insbesondere eine handhabungsgünstige Schnellverstellung des Anstellelementes in Richtung auf eine Verringerung der Öffnungsweite des Arbeitskopfes kann dadurch gegeben sein, dass die Rastfestsetzung in Richtung einer Verkleinerung der Öffnungsweite überlaufbar ist. So kann eine solche Schnellverstellung in Richtung auf eine Verkleinerung der Öffnungsweite auch ohne aktive Aufhebung der Rastfestsetzung allein zufolge entsprechender Betätigung des Eingriffselementes erfolgen, indem gemäß einer möglichen Ausgestaltung das Anstellelement allein in Schieberichtung beaufschlagt wird. Das Eingriffselement kann hierzu so ausgebildet sein, dass der mit dem Aufnahmeteil zusammenwirkende Bereich ein Überlaufen der Rastfestsetzungsstellung zumindest in einer Verschieberichtung erlaubt. Dies kann durch eine entsprechende Gestaltung, beispielsweise Querschnittsgestaltung der die Rastfestsetzung bildenden Elemente des Eingriffsteils und/oder des Aufnahmeteils erreicht sein, darüber hinaus gegebenenfalls aber auch allein zufolge einer entsprechenden Anordnung, beispielsweise Schwenkanordnung des Eingriffselementes an dem Anstellelement.

Darüber hinaus kann das Eingriffselement in die Eingriffsstellung vorgespannt sein. Hierzu kann eine Feder vorgesehen sein, die das Eingriffselement in Richtung auf die Rastfestsetzung mit dem Aufnahmeteil drängt. Die Aufhebung der Rastfestsetzung zufolge Einwirkung auf das Eingriffselement erfolgt in diesem Fall entsprechend entgegen der Kraft der Feder. Auch bei einer Schnellverstellung zufolge Überlaufen der Rastfestsetzung erfolgt eine Verlagerung des Eingriffselementes entgegen dieser Federkraft.

Gemäß einer bevorzugten Ausgestaltung kann an dem Anstellelement ein Schneidelement ausgebildet sein, beispielsweise, wie auch bevorzugt, in Form eines Schneidmessers, weiter insbesondere in Form eines gehärteten Schneidrades, und der Gegenhalter an einem feststehenden Teil des Arbeitskopfes ausgebildet sein. Der Gegenhalter kann durch eine oder mehrere Führungsrollen gegeben sein, die im Nutzungszustand das zu schneidende Rohr tangential berühren. Alternativ kann der Gegenhalter auch durch ein oder mehrere Schneidelemente gebildet sein.

In weiterer alternativer Ausgestaltung kann das Schneidelement am Gegenhalter angeordnet sein und das Anstellelement beispielsweise die vorbeschriebenen Führungsrollen tragen.

### Kurze Beschreibung der Zeichnungen

Nachstehend ist die Erfindung anhand der beigefügten Zeichnung, welche lediglich ein Ausführungsbeispiel darstellt, näher erläutert. Es zeigt:
- Fig. 1: in perspektivischer Darstellung ein Rohrschneidegerät der in Rede stehenden Art, betreffend die Stellung einer maximalen Öffnungsweite des Arbeitskopfes;

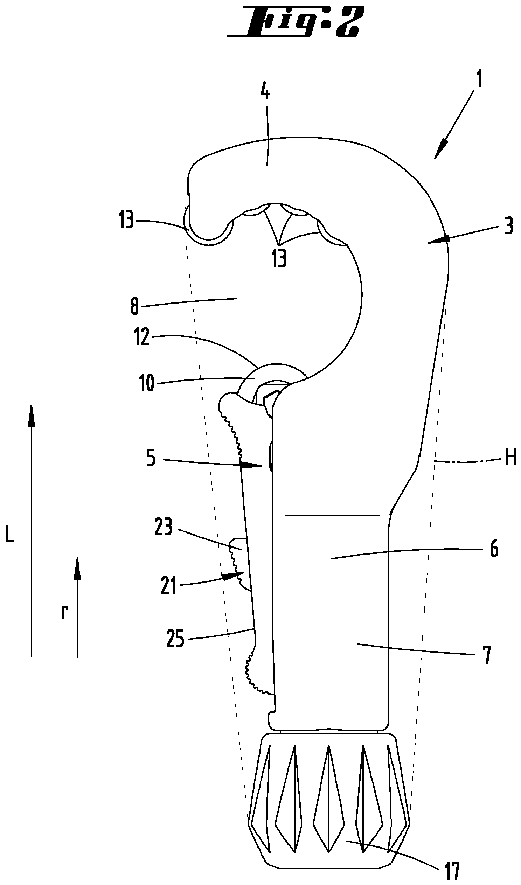

- Fig. 2: die Seitenansicht hierzu;

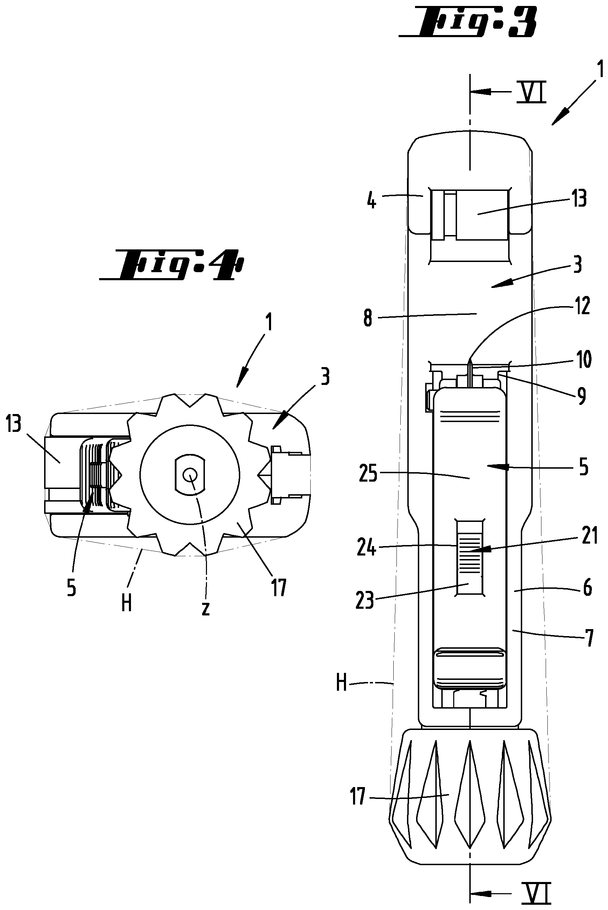

- Fig. 3: die Rückansicht hierzu;
- Fig. 4: die Unteransicht gegen das Rohrschneidegerät;
- Fig. 5: das Rohrschneidegerät in Seitenansicht gemäß Figur 2 bei schematischer Darstellung eines Schneidvorganges;
- Fig. 6: den Schnitt gemäß der Linie VI - VI in Figur 4;
- Fig. 7: die Herausvergrößerung des Bereiches VII in Figur 6;

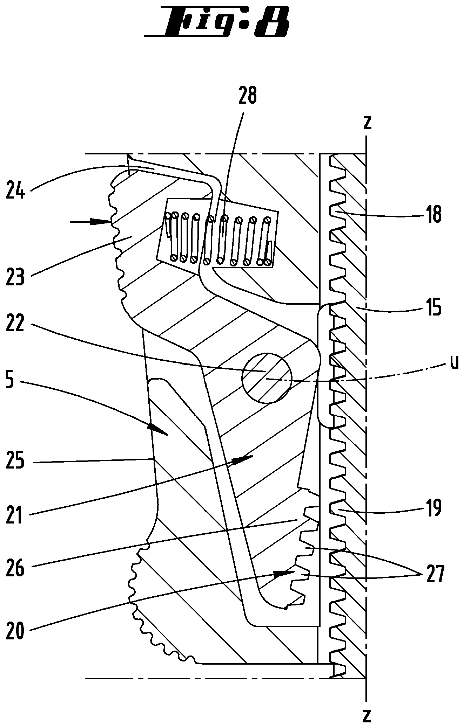

- Fig. 8: eine der Figur 7 entsprechende Darstellung, jedoch unter Aufhebung einer Rastfestsetzung;
- Fig. 9: eine der Figur 6 entsprechende Schnittdarstellung, jedoch bei gegenüber Figur 6 verringerter Öffnungsweite des Arbeitskopfes.

### Beschreibung der Ausführungsformen

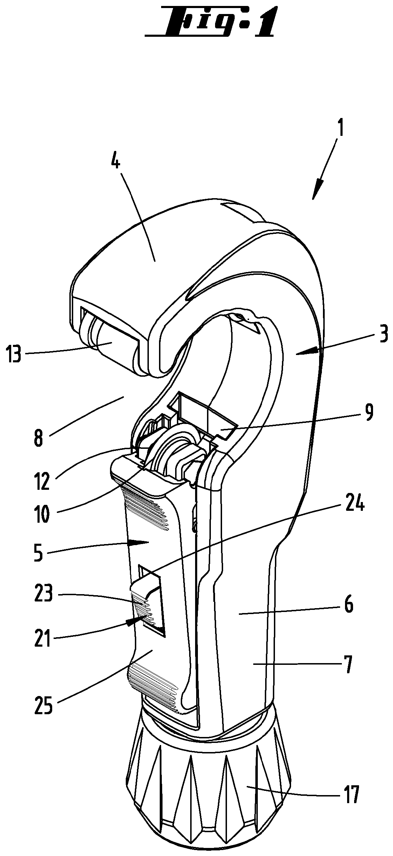

Dargestellt und beschrieben ist, zunächst mit Bezug zu Figur 1, ein Rohrschneidegerät 1 zum Zuschneiden von Rohrstücken 2.

Das Rohrschneidegerät 1 besitzt zunächst und im Wesentlichen einen C-förmigen Arbeitskopf 3. Ein C-Schenkel des Arbeitskopfes 3 formt einen bezogen auf das gesamte Rohrschneidegerät 1 endseitigen Gegenhalter 4, während der gegenüberliegende C-Schenkel des Arbeitskopfes 3 im Wesentlichen durch ein schiebeverlagerbares Anstellelement 5 gebildet ist.

Der die C-Schenkel bzw. den Gegenhalter 4 mit dem Anstellelement 5 verbindende C-Steg erstreckt sich über die C-Ausformung hinaus zur Ausbildung eines, zugleich einen Griffbereich 6 ausbildenden Fußteils 7.

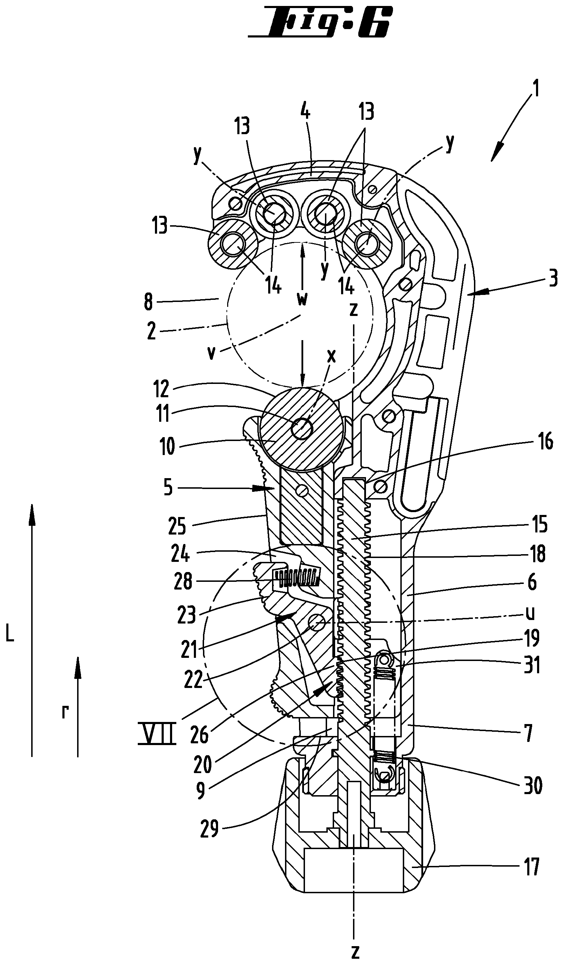

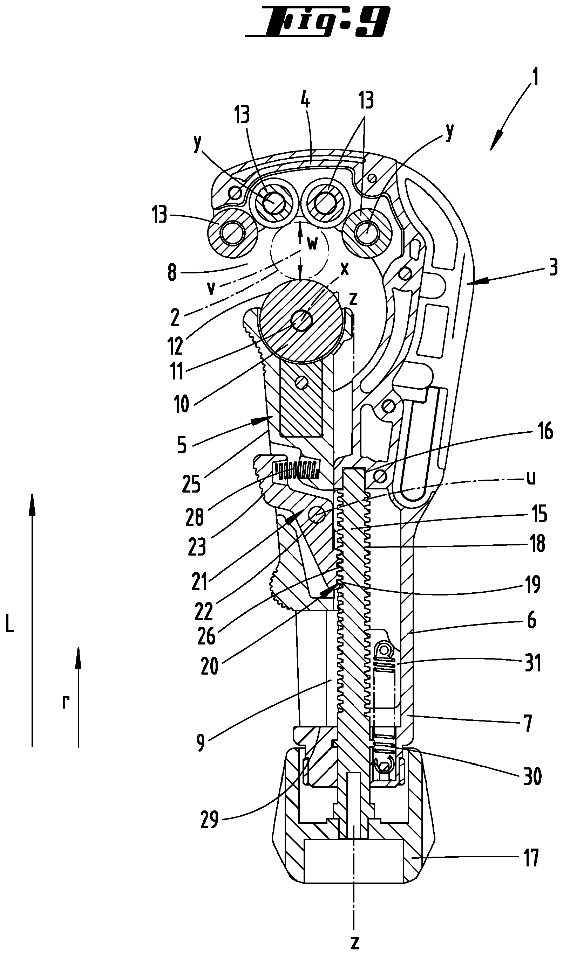

Die sich im Arbeitskopf 3 ergebende C-Öffnung 8 bildet den Arbeitsbereich, in welchem das zu schneidende Rohrstück 2 aufzunehmen ist (vgl. Figuren 6 und 9).

Der C-Schenkel des Arbeitskopfes 3 definiert zusammen mit dem anschließenden Fußteil 7 eine Längserstreckung L des Rohrschneidegerätes 1, wobei ein diesbezügliches Längserstreckungsmaß einem Mehrfachen, beispielsweise einem 2- bis 3-Fachen, der quer hierzu betrachteten Breitenerstreckung des Rohrschneidegerätes 1 entsprechen kann.

Das Anstellelement 5 ist im Wesentlichen in Richtung der Längserstreckung L an dem Fußteil 7 bzw. dem Griffbereich 6 linear verlagerbar. Hierzu kann, wie auch bevorzugt, eine Schlitten- oder Nutführung 9 vorgesehen sein.

Endseitig, der C-Öffnung 8 zugewandt, trägt das Anstellelement 5 ein Schneidelement 10 in Form eines bevorzugt aus Hartmetall bestehenden Schneidrades. Das Schneidelement 10 ist an dem Anstellelement 5 um eine senkrecht zur Verlagerungsrichtung r des Anstellelementes 5 ausgerichtete Drehachse 11 mit einer geometrischen Achse x frei drehbar gelagert.

Die mit Bezug auf die Achse x kreislinienförmig umlaufende Schneidkante 12 des Schneidelementes 10 ragt in jeder Verfahrstellung des Anstellelementes 5 über die die C-Öffnung 8 des Arbeitskopfes 3 definierende Randkante hinaus in die C-Öffnung 8.

Die die C-Öffnung 8 definierende Randkante des Arbeitskopfes 3 kann, wie aus den Darstellungen ersichtlich, kreislinienförmig gestaltet sein.

In Verfahrrichtung r gegenüberliegend zu dem Schneidelement 10 ist in dem dargestellten Ausführungsbeispiel an dem feststehend an dem Arbeitskopf 3 ausgebildeten Gegenhalter 4 eine Mehrzahl an Führungsrollen 13 vorgesehen. In dem dargestellten Ausführungsbeispiel sind vier solcher Führungsrollen 13 angeordnet. Diese können gleichgestaltet sein, mit jeweils einer Drehachse 14 und einer geometrischen Achse y, die bevorzugt parallel zu der Drehachse 11 mit der geometrischen Achse x des Schneidelementes 10 verlaufen.

Insbesondere die geometrischen Achsen y der Führungsrollen 13 können entlang einer Kreislinie angeordnet sein, mit einem gegebenenfalls durch die Randkontur der C-Öffnung 8 definierten Kreismittelpunkt.

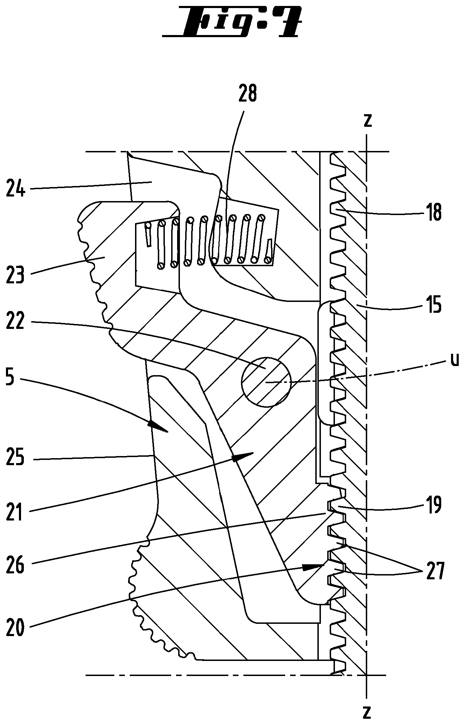

Wie weiter insbesondere aus den Darstellungen in den Figuren 6 und 7 ersichtlich, ergibt sich zwischen der Schneidkante 12 des Schneidelementes 10 und den zugewandten Oberflächen der Führungsrollen 13, die im Zuge eines Schneidprozesses sich im Wesentlichen tangential an die Oberfläche des Rohrstückes 12 anlegen, eine Öffnungsweite w, die im Wesentlichen dem Außendurchmesser des zu schneidenden Rohrstückes 2 entspricht. Die Öffnungsweite w ist zufolge Verlagerung des Anstellelementes 5 mit dem Schneidelement 10 veränderbar.

In dem Fußteil ist darüber hinaus ein Spindelteil 15 aufgenommen. Deren geometrische Längsachse z erstreckt sich im Wesentlichen in Richtung der Längserstreckung L, darüber hinaus bevorzugt gleichgerichtet zu der Verfahrrichtung r des Anstellelementes 5.

Das Spindelteil 15 kann einerends, dem Arbeitskopf 3 zugewandt, in einer Topföffnung 16 des Arbeitskopfes 3 drehbar gehaltert sein. Entsprechend ist das Spindelteil 15 um dessen Längsachse z drehbar, jedoch in Längserstreckung L des Rohrschneidegerätes 1 bzw. in Richtung der Längsachse z feststehend.

Das dem in der Topföffnung 16 aufgenommenen Ende gegenüberliegende Ende des Spindelteils 15 kann über das dem Gegenhalter 4 abgewandte Ende des Fußteils hinausgeführt sein. An diesem Ende kann ein Drehknauf 17 drehfest mit dem Spindelteil 15 verbunden sein. Der Drehknauf 17 dient als Handhabe zur Drehverlagerung des Spindelteils 15.

Das Spindelteil 15 weist wandungsaußenseitig ein Außengewinde 18, bevorzugt in Art eines Trapezgewindes, auf. Das Spindelteil 15 kann entsprechend eine Gewindespindel sein.

Das Außengewinde 18 kann als Aufnahmeteil 19 als Teil einer Rasteinrichtung 20 dienen. Weiterer Teil dieser Rasteinrichtung 20 kann ein Eingriffselement 21 sein.

Das Eingriffselement 21 ist zunächst und im Wesentlichen als Hebelteil ausgeformt, welches um eine Drehachse 22 mit einer geometrischen Achse u schwenkbar gehaltert ist. Die Drehachse 22 kann, wie auch bevorzugt, in dem Anstellelement 5 gehaltert sein, womit das Eingriffselement 21 zusammen mit dem Anstellelement 5 in Verfahrrichtung r schiebeverlagerbar ist.

Die geometrische Achse u kann, wie weiter auch bevorzugt, gleichgerichtet sein zu den geometrischen Achsen x und y von Schneidelement 10 und Führungsrollen 13.

Das Eingriffselement 21 formt ein Handhabungsende 23 aus. Dieses tritt durch einen fensterartigen Freischnitt 24 nach außen über die im Wesentlichen ebenflächig gebildete Handhabungsfläche 25 des Anstellelementes 5 hinaus.

Der dem Handhabungsende 23 mit Bezug zu der Drehachse 22 abgewandte Hebelteil des Eingriffselementes 21 kann einen Verzahnungsabschnitt 26 aufweisen, mit einer Anordnung einer Mehrzahl von Eingriffsvorsprüngen 27, die mit Bezug auf einen Längsschnitt, in welchem sich die Längsachse z als Linie darstellt, in ihrer Querschnittsgestaltung und in ihren Abständen zueinander angepasst sind an das Außengewinde 18 des Spindelteils 15 bzw. an das hierdurch dargestellte Aufnahmeteil 19.

Der Verzahnungsabschnitt 26 kann ausgehend von der C-Öffnung 8 betrachtet jenseits der Drehachse 22 bzw. der geometrischen Achse u ausgebildet sein, während das diesbezügliche Handhabungsende 23 von der C-Öffnung 8 aus betrachtet vor der Drehachse 22 gegeben sein kann.

Das Eingriffselement 21 ist in die Eingriffsstellung gemäß den Figuren 6 und 7 federvorgespannt. Hierzu kann, wie auch dargestellt, eine Feder 28, beispielsweise Zylinderfeder, vorgesehen sein, die sich einerends an dem Fußteil 7 abstützt und anderenends unterseitig gegen das Handhabungsende 23 des Eingriffselementes 21 tritt. Über die sich ergebende Hebelwirkung wird hierüber der Verzahnungsabschnitt 26 in Richtung auf die Eingriffsstellung zu dem Aufnahmeteil 19 bzw. zu dem Außengewinde 18 belastet.

Eine Aufhebung der Eingriffsstellung ist somit entsprechend nur durch eine Schwenkverlagerung des Eingriffselementes 21 entgegen der Kraft der Feder 28 möglich.

Das Anstellelement 5 kann zwischen zwei Anschlagstellungen verlagerbar sein, wobei eine, die größte Öffnungsweite w definierende Anschlagstellung durch einen Anschlag 29 am Fußteil 7 gegeben sein kann, gegen welchen Anschlag 29 das Anstellelement 5 treten kann.

Die weitere Anschlagstellung kann eine geringste Öffnungsweite w definieren, gegebenenfalls eine Öffnungsweite w die Null entsprechen kann, wobei weiter diese Anschlagstellung gegeben sein kann durch Anlage der Schneidkante 12 des Schneidelementes 10 an der oder den Oberflächen eines oder mehrerer der Führungsrollen 13.

Das Anstellelement 5 kann in Richtung auf den die größte Öffnungsweite w definierenden Anschlag 29 federbelastet sein. Hierzu kann eine Feder 30, beispielsweise, wie auch dargestellt, eine Zylinder-Zugfeder, vorgesehen sein, die einerends an dem Fußteil 7 angeordnet ist und anderenends an einem Ausleger 31 des Anstellelementes 5 angreift.

Die Verlagerung des Anstellelementes 5 in Verfahrrichtung r zur Verringerung der Öffnungsweite w erfolgt entsprechend gegen die Kraft der Feder 30, die bei Aufhebung des Rasteingriffes in der Rasteinrichtung 20 das Anstellelement 5 tendenziell in Richtung auf den Anschlag 29 drängt. Es kann hierdurch eine nahezu selbständige Rückverlagerung des Anstellelementes 5 nach Aufhebung der Verrastung gegeben sein.

Es ist so in handhabungsgünstiger Weise ein Rohrschneidegerät 1 angegeben, welches sowohl eine Feineinstellung als auch eine Grobeinstellung der Öffnungsweite w ermöglicht. Die Feineinstellung erfolgt unter Drehbetätigung des Spindelteiles 15. Das mit diesem in Eingriff stehende Eingriffselement 21 erfährt durch die Schraubverlagerung des Spindelteiles 15 eine Linearverlagerung in Verfahrrichtung r oder entgegen der Verfahrrichtung r, wobei unter Mitschleppen des Anstellelementes 5 über die Drehachse 22 des Eingriffselementes 21 die Öffnungsweite w veränderbar ist.

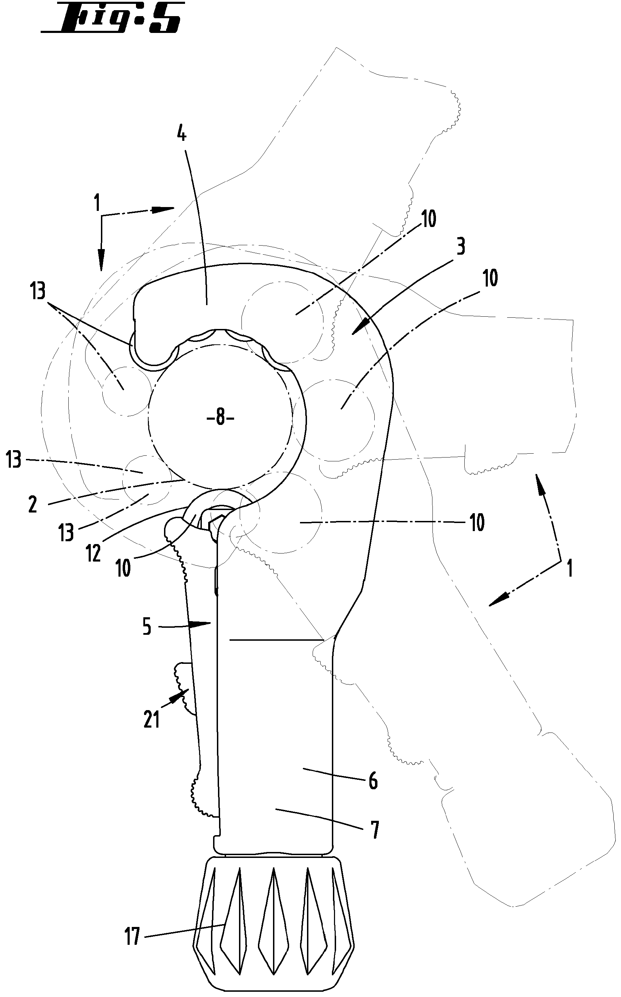

Eine solche Feineinstellung erfolgt insbesondere im Zuge eines in Figur 5 schematisch dargestellten Schneidvorganges, bei welchem durch Drehen des gesamten Rohrschneidegerätes 1 um die geometrische Rohrstückachse v ein Durchtrennen des Rohrstückes 2 durchgeführt wird, wobei die Schneidkante 12 des Schneidelementes 10 um die Rohrstückachse v rotierend sich in das Material der Rohrstückwandung einschneidet, wobei sich das Schneidelement 10 sukzessive zufolge entsprechender Drehverlagerung des Spindelteiles 15 über den Drehknauf 17 weiter in die Rohrstückwandung eingräbt. So erfolgt eine diesbezügliche Feineinstellung bzw. Nachstellung des Schneidelementes 10 nach jeder oder nach jeder zweiten oder dritten vollständigen Umdrehung des Rohrschneidegerätes 1, bis das Rohrstück 2 bzw. dessen Wandung vollständig durchtrennt ist.

Das Anstellelement 5 kann allein über den gesamtmöglichen Verlagerungsweg über das Spindelteil 15 bewegt werden. Es erweist sich jedoch als handhabungstechnisch günstig, über eine Grobverstellung das Anstellelement 5 insbesondere das Schneidelement 10 an das zu schneidende Rohrstück 2 heranzuführen. Der hierzu nötige Verlagerungsweg ist zwangsläufig abhängig vom Durchmesser des Rohrstückes 2 und von der Ausgangsstellung des Anstellelementes 5.

Auch zur Rückverlagerung in Richtung auf den fußteilseitigen Anschlag 29 kann, wie auch bevorzugt, die Grobeinstellung genutzt sein.

Hierzu kann das Eingriffselement 21 im Bereich des Handhabungsendes 23 betätigt werden, was die Aufhebung der Verrastung zwischen Verzahnungsabschnitt 26 und Aufnahmeteil 19 bzw. Außengewinde 18 zur Folge hat. Über das betätigte Eingriffselement 21 und gegebenenfalls unter Abstützung des das Eingriffselement 21 beispielhaft betätigenden Daumens auf der Handhabungsfläche 25 wird das Anstellelement 5 mit dem Schneidelement 10 und dem Eingriffselement 21 entlang der Nutführung 9 in Verfahrrichtung r oder entgegen der Verfahrrichtung r schiebeverlagert. Mit Beendigung dieser Verlagerung und Fortfall der Einwirkung auf das Eingriffselement 21 ergibt sich erneut eine Verrastungsstellung zwischen Eingriffselement 21 und Aufnahmeteil 19, von welcher aus weiter eine Feineinstellung zufolge Drehen des Spindelteiles 15 erfolgen kann.

In Verfahrrichtung r, d. h. in eine die Öffnungsweite w verringernde Verfahrrichtung betrachtet, wird der Verzahnungsabschnitt 26 des Eingriffselementes 21 quasi nachlaufend zu der Drehachse 22 des Eingriffselementes 21 mitgeschleppt. Durch die bevorzugt trapezförmige Querschnittsgestaltung der Verzahnung sowohl des Eingriffselementes 21 als auch des Aufnahmeteils 19 bzw. Außengewindes 18 kann sich eine in Richtung einer Verkleinerung der Öffnungsweite w überlaufbare Rastfestsetzung ergeben. Es kann so zur Verringerung der Öffnungsweite w durch eine Grobeinstellung eine Verlagerung des Anstellelementes 5 ohne aktive Beaufschlagung des Eingriffselementes 21 erfolgen, allein durch Schiebebeaufschlagung des Anstellelementes 5 über dessen Handhabungsfläche 25.

In die entgegengesetzte Richtung zur Verfahrrichtung r ist ein solches Überlaufen zufolge der Hebelanordnung des Eingriffselementes 21 bevorzugt nicht möglich.

Zufolge der vorgeschlagenen Ausgestaltung ergibt sich ein Rohrschneidegerät 1, welches in vorteilhafter Weise einhändig bedienbar sein kann, dies insbesondere hinsichtlich der Grobeinstellung bzw. Schiebeverlagerung des Anstellelementes 5.

Weiter ergibt sich ein Handhabungsvorteil dahingehend, dass das Rohrschneidegerät 1 unabhängig von der Verfahrstellung des Anstellelementes 5 seine äußere Kontur, insbesondere hinsichtlich seiner Länge in Längserstreckung L und seiner quer hierzu betrachteten Breitenerstreckung beibehält. Das Rohrschneidegerät 1 kann sich so entsprechend in jeder Anstellelement-Stellung innerhalb einer gleichbleibenden Hüllfläche einer gedachten, das Rohrschneidegerät 1 überspannenden Hülle H erstrecken. Das Rohrschneidegerät 1 benötigt so in vorteilhafter Weise in jeder Anstellelementstellung einen gleichgroßen Arbeitsraum um das zu schneidende Rohrstück.

### Liste der Bezugszeichen

| | | | |
|---|---|---|---|
| 1 | Rohrschneidegerät | 26 | Verzahnungsabschnitt |
| 2 | Rohrstück | 27 | Eingriffsvorsprung |
| 3 | Arbeitskopf | 28 | Feder |
| 4 | Gegenhalter | 29 | Anschlag |
| 5 | Anstellelement | 30 | Feder |
| 6 | Griffbereich | 31 | Ausleger |
| 7 | Fußteil | | |
| 8 | C-Öffnung | r | Verfahrrichtung |
| 9 | Nutführung | u | Achse |
| 10 | Schneidelement | v | Rohrstückachse |
| 11 | Drehachse | w | Öffnungsweite |
| 12 | Schneidkante | x | Achse |
| 13 | Führungsrolle | y | Achse |
| 14 | Drehachse | z | Längsachse |
| 15 | Spindelteil | | |
| 16 | Topföffnung | H | Hülle |
| 17 | Drehknauf | L | Längserstreckung |
| 18 | Außengewinde | | |
| 19 | Aufnahmeteil | | |
| 20 | Rasteinrichtung | | |
| 21 | Eingriffselement | | |
| 22 | Drehachse | | |
| 23 | Handhabungsende | | |
| 24 | Freischnitt | | |
| 25 | Handhabungsfläche | | |

## Patentansprüche

1. Rohrschneidegerät (1) mit einem Anstellelement (5) und einem Gegenhalter (4), die an einem C-förmigen Arbeitskopf (3) ausgebildet sind, wobei weiter der Arbeitskopf (3) in ein auch als Griffbereich (6) nutzbares Fußteil (7) übergeht und das Anstellelement (5) relativ zu dem Fußteil (7) zur Veränderung einer Öffnungsweite (w) des Arbeitskopfes (3) verfahrbar ist, wobei weiter das Anstellelement (5) mittels einer Rasteinrichtung (20), die ein handbetätigbares Eingriffselement (21) aufweist, das mit einem Aufnahmeteil (19) zur Rastfestsetzung zusammenwirkt, an dem Fußteil (7) festsetzbar ist, **dadurch gekennzeichnet, dass** das Eingriffselement (21) an dem Anstellelement (5) ausgebildet ist sowie mit dem Anstellelement (5) relativ zu dem Aufnahmeteil (19) verfahrbar ist, dass das Anstellelement (5) in dem Fußteil (7) in einer Nutführung (9) formschlüssig jedoch verfahrbahr gehaltert ist und dass das Rohrschneidegerät (1) unabhängig von einer Verfahrstellung des Anstellelementes (5) seine äußere Kontur hinsichtlich seiner Länge in Längserstreckung (L) und seiner hierzu betrachteten Breitenerstreckung beibehält.

2. Rohrschneidegerät nach Anspruch 1, **dadurch gekennzeichnet, dass** eine trapezförmige Querschnittsgestaltung einer Verzahnung sowohl des Eingriffselementes (21) als auch des Aufnahmeteils (19) bzw. eines Außengewindes (18) gegeben ist, wodurch eine sich in Richtung einer Verkleinerung der Öffnungsweite (W) überlaufbare Rastfestsetzung gegeben ist während in die entgegengesetzte Richtung zur Verfahrrichtung (r) ein Überlaufen zufolge der Hebelanordnung des Eingriffselementes (21) nicht möglich ist.

3. Rohrschneidegerät nach einem der vorhergehenden Ansprüche, **dadurch gekennzeichnet, dass** das Aufnahmeteil (19) an einem hinsichtlich einer Bewegung in Richtung einer Längsachse (z) des Aufnahmeteils (19) in dem Fußteil (7) feststehenden Spindelteil (15) ausgebildet ist.

4. Rohrschneidegerät nach Anspruch 3, **dadurch gekennzeichnet, dass** das Spindelteil (15) um dessen Längsachse (z) drehbar ist, zur Feineinstellung der Öffnungsweite (w).

5. Rohrschneidegerät nach einem der vorhergehenden Ansprüche, **dadurch gekennzeichnet, dass** das Anstellelement (5) zwischen einem Anschlag an dem Arbeitskopf (3) und einem Anschlag (29) an dem Fußteil verfahrbar ist.

6. Rohrschneidegerät nach Anspruch 5, **dadurch gekennzeichnet, dass** das Anstellelement (5) mittels einer Feder (29) in eine Anschlagstellung an dem Fußteil (7) vorgespannt ist.

7. Rohrschneidegerät nach einem der vorhergehenden Ansprüche, **dadurch gekennzeichnet, dass** das Eingriffselement (21) in die Eingriffsstellung vorgespannt ist.

8. Rohrschneidegerät nach einem der vorhergehenden Ansprüche, **dadurch gekennzeichnet, dass** an dem Anstellelement (5) ein Schneidelement (10) ausgebildet ist und dass der Gegenhalter (4) an einem feststehenden Teil des Arbeitskopfes (3) ausgebildet ist.

## Claims

1. Pipe-cutting device (1) comprising a cutting element (5) and a counterholder (4), which are formed on a C-shaped working head (3), wherein the working head (3) further merges into a base portion (7) that can also be used as a grip area (6), and the contact element (5) is movable relative to the base portion (7) to adjust an opening width (w) of the working head (3), wherein the contact element (5) can be secured to the base portion (7) by means of a detent locking mechanism (20) that includes a manually operable engagement element (21) which interacts with a receiving portion (19) for detent locking, **characterized in that** the engagement element (21) is formed on the adjustment element (5) and is movable with the adjustment element (5) relative to the receiving part (19), that the adjustment element (5) is held in the base part (7) in a groove guide (9) in a form-fitting yet movable manner, and that the pipe-cutting device (1) retains its outer contour-in terms of its length in the longitudinal direction (L) and its width relative thereto-regardless of the position of the contact element (5).

2. Pipe-cutting device according to claim 1, **characterized in that** a trapezoidal cross-sectional shape of a toothing is provided on both the engagement element (21) and the receiving part (19) or an external thread (18), respectively, thereby providing a detent locking mechanism that can be overrun in the direction of a reduction in the opening width (W), while in the direction opposite to the travel direction (r), overriding is not possible due to the lever arrangement of the engagement element (21).

3. Pipe-cutting device according to one of the preceding claims, **characterized in that** the receiving part (19) is formed on a spindle part (15) that is fixed in the base part (7) with respect to movement in the direction of a longitudinal axis (z) of the receiving part (19).

4. Pipe-cutting device according to claim 3, **characterized in that** the spindle part (15) is rotatable about its longitudinal axis (z) for fine adjustment of the opening width (w).

5. Pipe-cutting device according to any one of the preceding claims, **characterized in that** the contact element (5) is movable between a stop on the working head (3) and a stop (29) on the base (7).

6. Pipe-cutting device according to claim 5, **characterized in that** the contact element (5) is biased by a spring (29) into a stop position against the base (7).

7. Pipe-cutting device according to any of the preceding claims, **characterized in that** the engagement element (21) is biased into the engagement position.

8. Pipe-cutting device according to one of the preceding claims, **characterized in that** a cutting element (10) is formed on the contact element (5) and that the counterholder (4) is formed on a fixed part of the working head (3).

## Revendications

1. Appareil de coupe de tubes (1) comprenant un élément d'appui (5) et un contre-support (4), qui sont formés sur une tête de travail (3) en forme de C, la tête de travail (3) se prolongeant en outre par une partie de base (7) pouvant également servir de zone de préhension (6), et l'élément d'appui (5) étant mobile par rapport à la partie de base (7) pour modifier une largeur d'ouverture (w) de la tête de travail (3), l'élément d'appui (5) pouvant être fixé à la partie de base (7) au moyen d'un dispositif d'encliquetage (20) comportant un élément d'engagement (21) actionnable à la main, qui coopère avec une partie de réception (19) pour l'encliquetage, **caractérisé en ce que** l'élément d'engagement (21) est formé sur l'élément de réglage (5) et est mobile avec celui-ci par rapport à la partie de réception (19), **en ce que** l'élément de réglage (5) est logé dans la partie de base (7) au sein d'un guide rainuré (9) par complémentarité de forme tout en restant mobile, et **en ce que** l'appareil de coupe de tubes (1) conserve son contour extérieur, indépendamment de la position de déplacement de l'élément d'appui (5), tant en ce qui concerne sa longueur dans le sens longitudinal (L) que sa largeur par rapport à celle-ci.

2. Appareil de coupe de tubes selon la revendication 1, **caractérisé en ce qu'**une configuration de section transversale trapézoïdale d'une denture est prévue à la fois sur l'élément d'engagement (21) et sur la partie de réception (19) ou d'un filetage extérieur (18), ce qui permet un enclenchement à crans pouvant être dépassé dans le sens d'une réduction de la largeur d'ouverture (W), tandis que, dans la direction opposée à la direction de déplacement (r), un dépassement n'est pas possible en raison de la disposition en levier de l'élément d'engagement (21).

3. Appareil de coupe de tubes selon l'une des revendications précédentes, **caractérisé en ce que** la partie de réception (19) est formée sur une partie de broche (15) fixe dans la partie de base (7) en ce qui concerne un mouvement dans la direction d'un axe longitudinal (z) de la partie de réception (19).

4. Appareil de coupe de tubes selon la revendication 3, **caractérisé en ce que** la partie formant broche (15) peut tourner autour de son axe longitudinal (z) pour permettre un réglage fin de la largeur d'ouverture (w).

5. Appareil de coupe de tubes selon l'une des revendications précédentes, **caractérisé en ce que** l'élément de butée (5) est mobile entre une butée située sur la tête de travail (3) et une butée (29) située sur la partie de base.

6. Appareil de coupe de tubes selon la revendication 5, **caractérisé en ce que** l'élément de butée (5) est précontraint au moyen d'un ressort (29) dans une position de butée sur la partie de base (7).

7. Appareil de coupe de tubes selon l'une des revendications précédentes, **caractérisé en ce que** l'élément d'engagement (21) est précontraint en position d'engagement.

8. Appareil de coupe de tubes selon l'une des revendications précédentes, **caractérisé en ce qu'**un élément de coupe (10) est formé sur l'élément d'appui (5) et **en ce que** le contre-appui (4) est formé sur une partie fixe de la tête de travail (3).
